# EUROPEAN PATENT APPLICATION

(11) **EP 0 911 555 A2**
(43) Date of publication of application: **28.04.1999**
(21) Application number: 98118923.6
(22) Date of filing: 07.10.1998
(51) Int. Cl.: F16K 1/42, F16J 15/12

(54) **Seal assembly**

(30) Priority: 14.10.1997 US 949516
(71) Applicant: HOKE INCORPORATED, Cresskill, New Jersey 07626 (US)
(72) Inventor: Radossi, Sergio, Cresskill, New Jersey 07626 (US); Seltser, Vadiim, Cresskill, New Jersey 07626 (US)
(74) Representative: VOSSIUS & PARTNER

(57) **Abstract**

A seal assembly (1) having upper and lower portions (54,55) with an opening (51,70) in each portion in alignment with each other. The upper portion has an upper surface (73) and the lower portion has a lower surface (57). A belleville spring assembly (52) is mounted in the seal assembly between the upper and lower surfaces. The spring assembly has an opening (53) therein which is in alignment with the opening in the body portions and has an inclined body portion (66) extending from the opening to its end edge. The upper portion is an upper body portion and the lower portion is a lower flange portion having a diameter greater than the diameter of the upper body portion. The spring assembly is imbedded within the lower flange portion.

## Description

The present invention is directed to a seal assembly and more particularly to a seal assembly adapted to be used in a valve.

Sealing means are commonly used on the valve seat of a valve having an inlet and an outlet. The sealing means cooperate with, or are a part of, a valve piston to cause the valve to stop the flow of fluid from the inlet to the outlet and to open the valve to permit the flow of fluid. In one valve structure the piston is moved toward and strikes the sealing means to stop the flow or is moved away from the sealing means to permit flow. In certain installations the sealing function is not always as effective as may be desired. In addition, the constant contact of the piston with the sealing means increases the possibility of wear on either the sealing means, the piston or both.

The present invention avoids these drawbacks and has for one of its objects the provision of an improved seal assembly which insures effective sealing function.

Another object of the present invention is the provision of an improved seal assembly which reduces wear.

Another object of the present invention is the provision of an improved seal assembly which may be easily installed.

Another object of the present invention is the provision of an improved seal assembly which is inexpensive to manufacture and simple to maintain.

Other and further objects will be obvious upon the understanding of the illustrative embodiment about to be described, or which will be indicated in the appended claims, and various advantages not referred to herein, will occur to one skilled in the art upon employment of the invention in practice.

A preferred embodiment of the invention has been chosen for purposes of illustration and description and is shown in the accompanying drawings forming a part of the specification,
wherein:

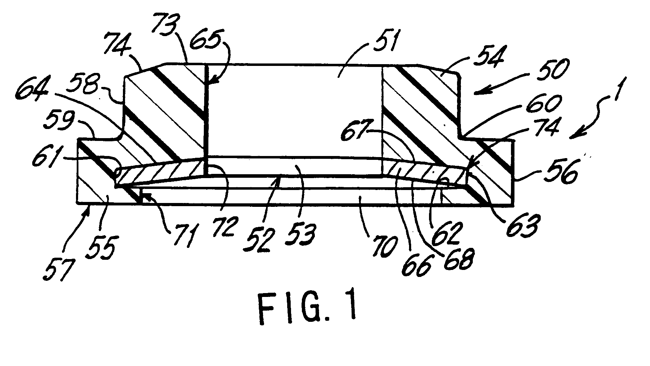

Fig. 1 is a side sectional view of a seal assembly made in accordance with the present invention.

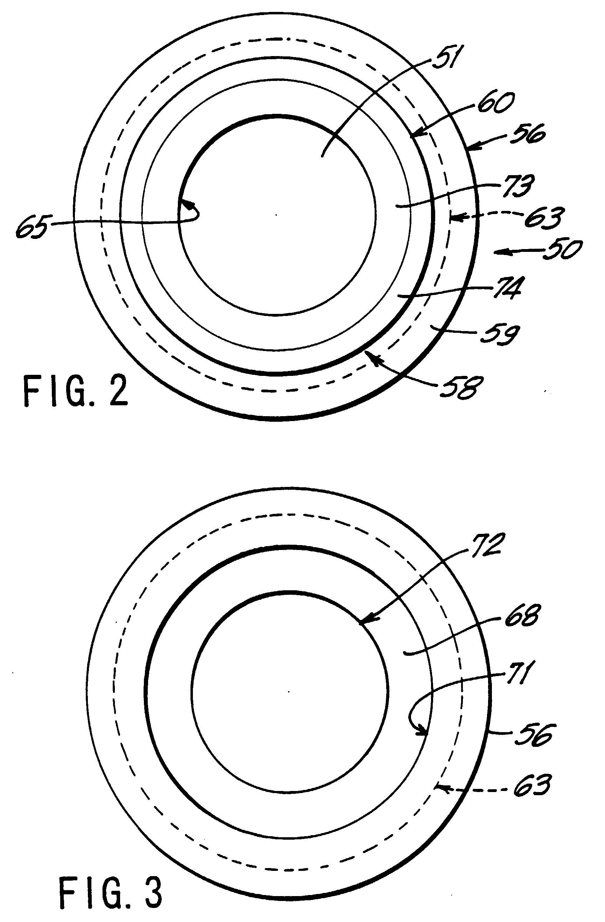

Fig. 2 is a top view thereof.
Fig. 3 is a bottom view thereof.
Fig. 4 is a sectional view of a valve structure showing the seal assembly in place in its operative position.

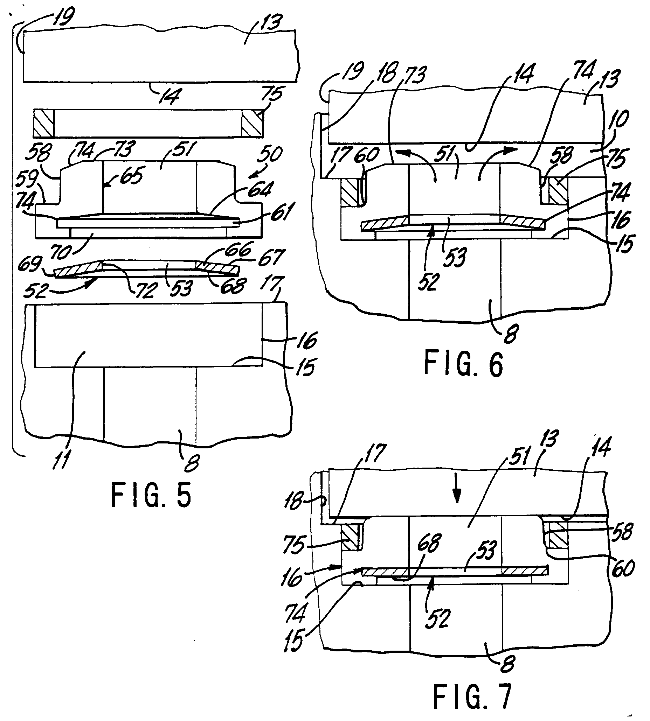

Fig. 5 is an enlarged exploded view of a portion of the valve structure shown in Fig. 4.
Fig. 6 is an enlarged view of the portion of the valve structure shown in Fig. 4 showing the position of the seal assembly when the valve is in its open position.
Fig. 7 is an enlarged view similar to Fig. 6 showing the position of the seal assembly when a valve structure is in its closed position.

The seal assembly 1 of the present invention comprises a circular jacket 50 having an upper body portion 54 and a lower flange portion 55. The jacket 50 may be made from resilient material such as teflon or peek. The upper body portion 54 has a central opening 51 therein with an inner peripheral wall 65 and the lower flange portion 55 has a central opening 70 therein having an inner sidewall 71. The upper body portion 54 has a top wall 73 which is connected to the outer wall 58 of the upper body portion by an inclined surface 74. The outer peripheral wall 56 of the lower flange portion 55 has a greater diameter than the diameter of the outer peripheral wall 58 of the upper body portion 54. The lower flange portion 55 has a bottom surface 57, which is preferably flat, and has a flat top surface 59 which meets and forms a shoulder 60 with the peripheral outer wall 58 of the upper body portion 54. The diameter of the opening 70 in the lower flange portion 55 is greater than the diameter of the opening 51 in the body portion 54. A groove 61 is provided in the interior of the outer lower flange portion 55. The groove 61 has a bottom wall 62, which is preferably flat, which ends in and merges with the inner side wall 71 of the opening 70, an end wall 63 and an inclined top wall 64 which ends in and merges with the inner side wall 65 of the opening 51 in the upper body portion 54 and which connects the side 65 of the opening 51 with end wall 63 in groove 61 to form a shoulder 75 therewith.

A washer 52 in the form of a belleville spring is mounted in the groove 61 in the lower flange portion 55. The belleville spring 52 is preferably made of metal and has an opening 53 therein which is preferably the same size as the opening 51 in the upper body portion 54. The spring 52 has a body portion 66 which is inclined at an angle approximately the same as the angle of the inclined top wall 64 of the groove 61. The belleville spring 52 has an upper face 67, a lower face 68, a peripheral outer edge 69 and an internal wall 72 which comprises the inner edge of opening 53. The spring 52 sits in the groove 61 with its opening 72 in alignment with opening 51, its end edges 69 abut the edges 63 of the groove 61, its top surface 67 abutting the top wall 64 of the groove 61 and its lower face 68 spaced away from the bottom wall 62 of the groove 61. When pressure is applied to the upper face 73 of the jacket 50, the jacket 50 flexes downwardly and the belleville spring 52 will also flex downwardly. In this position the belleville spring 52 is flattened but still remains with its lower surface 68 spaced above the bottom wall 62 of the lower surface 57 of the jacket 50. The jacket 50 flexes around the shoulder 60 in the jacket 50 and the shoulder 75 in the groove 61. When pressure is released, the belleville spring 52 will spring back up to its normal position and will raise the jacket 50 upwardly to its normal position.

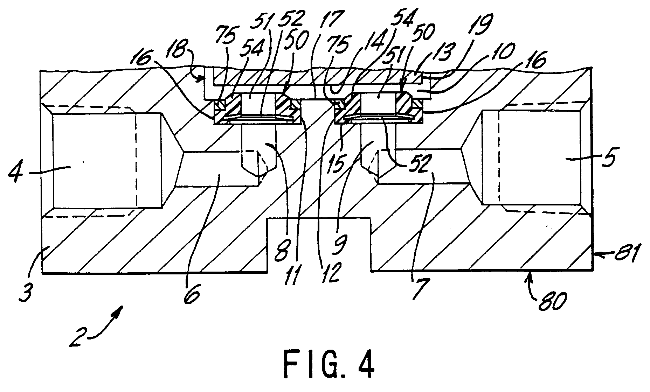

The operation of the seal assembly 1 will be described particularly in connection with its use in the valve 2 as shown in Fig. 4. However, it will be understood that the seal assembly 1 of the present invention may be used in connection with other valve structures or other structures. The valve structure 2 comprises a body portion 3 having a lower wall 80 and a peripheral outer wall 81 which is cylindrical. The outer wall 81 has an inlet 4 and an outlet 5 therein each of which has an inlet and an outlet conduit 6-7, respectively, and an inlet and outlet seat orifice 8-9 respectively, all of which are in communication with each other. In the drawing the inlet and outlet 45 and their inlet and outlet conduits are shown as preferably being parallel to the bottom walls 81 and the seat orifices 8-9 being substantially at right angles thereto. The fluid-passage chamber 10 has a bottom wall 17 and a circular upstanding peripheral side wall 18. The seat orifices 8-9 communicate with a fluid-passage chamber 10 through spaced valve seats 11-12 formed in the floor 17 of chamber 10. The valve seats 11 and 12 each comprise a flat floor 15 surrounding the seat orifices 8-9 and a circular upstanding peripheral side wall 16.

A piston assembly 13 is movably mounted in the fluid-passage chamber 10 and is provided with a lower flat face 14 and a circular peripheral edge 19. Means (not shown) are provided for moving the piston 13 within the fluid-passage chamber 10. Sealing means (not shown) may also be provided between the piston assembly 13 and the chamber 10. When the valve is open, the piston 13 is in its raised position and fluid will flow from the inlet 4 to outlet 5 through inlet conduit 6, seat orifice 8, valve seat 11, chamber 10, valve seat 12, seat orifice 9 and outlet conduit 7. When the valve is closed, the piston 13 is in its lowered position so that no fluid will flow.

A seal assembly 1 made in accordance with the present invention is positioned within the inlet and outlet valve seats 11-12 and rests on the flat floor 15 of each. The peripheral wall 56 of the lower flange 55 of the jacket 50 abuts the side wall 16 of each valve seat 11-12. When the seal assemblies 1 are placed in the valve seats 11-12 they are held in place by retainers 75, which may be made of metal and which rest on the top surface 59 of flange 55 and abut against inner wall 16 of the valve seats 11-12 and outer surface 58 of upper body portion 54. When the piston 13 is moved down its lower face 14 will strike the top surface 73 of the two seal assemblies 1 to cover the openings 51 in the jackets 50 so that no fluid will flow therethrough. When the piston 13 is moved up, its lower face 14 will be moved away from top surface 73 of the jacket 50 to uncover the openings 51 so that fluid can flow from the inlet 4 to the outlet 5 as set forth hereinabove.

When the piston 13 is in its lowered flow-preventing position, its bottom wall 14 is in contact with the top surface 73 of both of the seal assemblies 1 in order to cover and close openings 51. In this position, the jacket 50 of each seal assembly 1 will flex downwardly against the action of the belleville spring 52, as described above. Each seal assembly 50 is slightly depressed to insure an effective seal. When the lower face 14 of the piston 13 strikes the top walls 73 of the seal assemblies 1, the impact is cushioned to reduce wear. The openings 51 are closed so that no fluid flows from the inlet 4 to the outlet 5. When it is desired to open the valve so that the fluid flows, the piston 13 is raised to lift its face 14 away from the top surfaces 73 inlet and outlet seal assemblies 1 to uncover the openings 51. This will allow fluid to move from the inlet 4 to the outlet 5. The belleville spring 52 will move back to its normal position thereby moving the jacket 50 back to its normal position.

It will thus be seen that the present invention provides an improved seal assembly which insures effective sealing function, which reduces wear, which may be easily installed and which is inexpensive to manufacture and simple to maintain.

As many varied modifications of the subject matter of this invention will become apparent to those skilled in the art from the detailed description given hereinabove, it will be understood that the present invention is limited only as povided in the claims appended hereto.

## Claims

1. A seal assembly comprising upper and lower portions, an opening in each of said portions in alignment with each other, said upper portion having an upper surface and said lower portion having a lower surface, a spring assembly mounted in said seal assembly between said upper and lower surfaces, said spring assembly having an opening therein in alignment with the opening in the body portions, said spring assembly comprising an inclined body portion extending from its opening to an end edge thereof.

2. A seal assembly as set forth in Claim 1 wherein the upper portion comprises an upper body portion and the lower portion comprises a lower flange portion having a diameter greater than the diameter of the upper body portion.

3. A seal assembly as set forth in Claim 2 wherein said spring assembly is imbedded in a groove within the lower flange portion having an end wall, a bottom wall and a top wall, wherein the opening in the lower flange portion is of greater diameter than the opening in the upper body portion, and the end edge of the spring assembly abuts the end wall of the groove.

4. A seal assembly as set forth in Claim 3 wherein the top wall of the groove is inclined at an angle away from the bottom surface of the lower flange, the bottom wall of the groove is flat and is spaced above the bottom surface of the lower flange, and the end walls of the groove and the top wall of the groove form a shoulder with each other.

5. A seal assembly as set forth in Claim 4 wherein said seal assembly has a flat top, said flat top surface is connected to said peripheral wall by an inclined surface, and the lower flange has a top surface which is connected to the peripheral wall of the upper body portion to form a shoulder therewith.

6. A seal assembly as set forth in Claim 5 wherein the incline of the spring assembly is the same as the incline of the top wall of the groove and is adapted to lie against the top wall of the groove when imbedded therein, said spring assembly is made of a metal and is a belleville spring.

7. A seal assembly as set forth in Claim 6 wherein the upper body portion and the flange portion are made of resilient material.

8. A valve having an inlet and an outlet, a pair of valve seats interposed between said fluid passage chamber and said inlet and outlet, a seal assembly mounted in each of said valve seats, said seal assembly comprising upper and lower portions, an opening in each of said portions in alignment with each other, said openings being in communication with said inlet and said outlet, said upper portion having an upper surface and said lower portion having a lower surface, a spring assembly mounted in each of said seal assemblies, between said upper and lower surfaces, said spring assembly having an opening therein in alignment with the opining in the body portions, said spring assembly comprising an inclined body portion extending from its opening to an end edge thereof, and means movably mounted in said fluid passage chamber to strike the upper surface of the seal assembly in order to prevent the flow of fluid from the inlet to the outlet.

9. A valve as set forth in Claim 8 wherein the upper portion comprises an upper body portion and the lower portion comprises a lower flange portion having a diameter greater than the diameter of the upper body portion.

10. A valve as set forth in Claim 9 wherein said spring assembly is imbedded in a groove within the lower flange portion having an end wall, a bottom wall and a top wall, the opening in the lower flange portion is of grater diameter than the opening in the upper body portion, and in said flange portion the end edge of the spring assembly abuts the end wall of the groove.

11. A valve as set forth in Claim 10 wherein the top wall of the groove is inclined at an angle away from the bottom surface of the lower flange, the bottom wall of the groove is flat and is spaced above the bottom surface of the lower flange, and the end walls of the groove and the top wall of the groove form a shoulder with each other.

12. A valve as set forth in Claim 11 wherein said seal assembly has a flat top, said flat top surface is connected to said peripheral wall by an inclined surface, and the lower flange has a top surface which is connected to the peripheral wall of the upper body portion to form a shoulder therewith.

13. A valve as set forth in Claim 12 wherein the incline of the spring assembly is the same as the incline of the top wall of the groove and is adapted to lie against the top wall of the groove when imbedded therein, said spring assembly is made of a metal and is a belleville spring.

14. A valve as set forth in Claim 13 wherein the upper body portion and the flange portion are made of resilient material.
